# EUROPÄISCHE PATENTANMELDUNG

(11) **EP 4 140 797 A1**
(43) Veröffentlichungstag der Anmeldung: **01.03.2023**
(21) Anmeldenummer: 22189414.0
(22) Anmeldetag: 09.08.2022
(51) Int. Cl.: B60K 37/06, E02F 9/20, G05G 1/06

(54) **BEDIENEINHEIT FÜR EIN NUTZFAHRZEUG**

(30) Priorität: 30.08.2021 DE 102021122397
(71) Anmelder: elobau GmbH & Co. KG, 88299 Leutkirch im Allgäu (DE)
(72) Erfinder: CALIEBE, Simon, 88316 Isny (DE); BUTSCHER, Roland, 88316 Isny (DE); GERHARDT, Ulrich, 87452 Altusried (DE)
(74) Vertreter: VKK Patentanwälte PartG mbB

(57) **Zusammenfassung**

Bedieneinheit für ein Nutzfahrzeug, aufweisend einen Griffbereich, mindestens eine Betätigungseinheit und eine Steuereinheit, wobei der Griffbereich eine Vielzahl berührungserfassender Sensoreinheiten aufweist, wobei die Steuereinheit Signale der Sensoreinheiten erfassend und auf Grundlage der Signale eine beabsichtigte Bedienung erkennend ausgebildet ist, wobei eine Anordnung der Sensoreinheiten derart ausgebildet ist, dass mittels der Steuereinheit unterschiedliche Handpositionen erkennbar sind, wobei die Steuereinheit in Abhängigkeit von der Handposition, durch die Bedieneinheit und/oder die mindestens eine Betätigungseinheit erzeugte Steuersignale freigebend ist.

## Beschreibung

Die vorliegende Erfindung betrifft eine Bedieneinheit für ein Nutzfahrzeug, aufweisend einen Griffbereich, mindestens eine Betätigungseinheit und eine Steuereinheit, wobei der Griffbereich eine Vielzahl berührungserfassender Sensoreinheiten aufweist, wobei die Steuereinheit Signale der Sensoreinheiten erfassend und auf Grundlage der Signale eine beabsichtigte Bedienung erkennend ist.

Eine Bedieneinheit zur Verwendung in einem Nutzfahrzeug, insbesondere in off-road Fahrzeugen, dient üblicherweise zur Steuerung verschiedenster beweglicher Komponenten. Diese Steuerung ist zum einen durch eine Schwenkbewegung der Bedieneinheit an sich und zum anderen durch an der Bedieneinheit angeordnete Betätigungseinheiten beispielsweise in Form von Tastern oder Daumenrädern möglich. Die Bedieneinheit weist daher neben dem Griffbereich auch die eingangs genannten Sensoreinheiten auf. Insbesondere aufgrund von Unebenheiten auf der Fahrbahn oder einer versehentlichen Berührung des Nutzers kann es zu einer ungewollten Betätigung der Bedieneinheit kommen. Diese verursacht ungewollte Bewegungen der beweglichen Komponenten, was wiederum zu Sach- oder gar Personenschäden führen kann.

Aus dem Stand der Technik sind daher Vorrichtungen bekannt, die US 2013 / 325 151 A1 offenbart eine berührungssensitive Bedienanordnung aufweisend einen Bedienhebel mit einem Handstück, wobei das Handstück eine Sensormatrix zur Berührungserfassung in einem Griffbereich aufweist und eine Auswerteeinheit ein Signal zur Freigabe der Benutzung der Bedienanordnung ausgibt, sofern ein oder mehrere Grenzwerte erreicht sind. Weiter umfassen die Grenzwerte beispielsweise die Überdeckung eines vorgegebenen Griffbereichs, bestimmte Berührungspunkte zwischen Nutzer und Griffbereich und/ oder eine erwartete zeitliche Länge des Kontaktes zwischen Nutzer und Griffbereich. Die Sensoren sind insbesondere kapazitiv, hitzeempfindlich oder mit Infrarot ausgebildet.

Die DE 10 2014 214 989.4 offenbart eine Bedienanordnung für ein Nutzfahrzeug, welche einen Bedienhebel mit einem Handstück aufweist, wobei das Handstück einen Griffbereich mit einer Vielzahl an berührungserfassenden Sensoreinheiten aufweist. Weiter weist die Bedienanordnung eine Auswerteeinheit zur Erzeugung eines Handpräsenzsignals während einer Betätigungsabsicht eines Nutzers auf, wobei zur Erkennung einer Handposition eine Vielzahl an Berührungsbedingungen angegeben sind.

Die EP 3 264 231 B1 offenbart eine Vorrichtung zum Umwandeln von Hand- oder Fingerpositionen oder -bewegungen in elektrische Signale, wobei die Vorrichtung einen Hebel zum Aufnehmen eines oder mehrerer Finger oder einen Teil einer Hand, einen Hebelverstellungssensor, eine Vielzahl an Berührungssensoren zur Erkennung einer Handposition und einen elektrischen Datenprozessor aufweist. Der elektrische Datenprozessor ist als einer ausgelegt, der ein elektrisches Ausgangssignal basierend auf einem elektrischen Eingangssignal mittels eines Steuerungsantwortverhältnis von elektrischem Eingangssignal zu elektrischem Ausgangssignal generiert, wobei dieses Verhältnis über die Übereinstimmung oder Ähnlichkeit der Handposition und einer Bezugsberührungspunktkarte bestimmt ist.

Ein Nutzer der Bedieneinheit steuert die beweglichen Komponenten des Nutzfahrzeuges häufig über mehrere Stunden hinweg. Eine konstante notwendige Haltung der Hand in einer Position zur Bestätigung der Handpräsenz ist dabei äußert unergonomisch und kann zu chronischen Schmerzen führen. Auch der Verlust an Konzentration durch ein langes Verharren in einer Position ist nicht auszuschließen.

Die vorliegende Erfindung stellt sich daher die Aufgabe, eine beabsichtigte Bedienung in Abhängigkeit unterschiedlicher Handpositionen zu erkennen.

Diese Aufgabe wird gelöst, durch eine Bedieneinheit für ein Nutzfahrzeug, aufweisend einen Griffbereich, mindestens eine Betätigungseinheit und eine Steuereinheit, wobei der Griffbereich eine Vielzahl berührungserfassender Sensoreinheiten aufweist, wobei die Steuereinheit Signale der Sensoreinheiten erfassend und auf Grundlage der Signale eine beabsichtigte Bedienung erkennend ausgebildet ist, wobei eine Anordnung der Sensoreinheiten derart ausgebildet ist, dass mittels der Steuereinheit unterschiedliche Handpositionen erkennbar sind, wobei die Steuereinheit in Abhängigkeit von der Handposition, durch die Bedieneinheit und/oder die mindestens eine Betätigungseinheit erzeugte Steuersignale freigebend ist.

Die Bedieneinheit weist erfindungsgemäß eine für einen Nutzer angenehme und ergonomisch angepasste Form des Griffbereichs auf. Eine Betätigungseinheit ist erfindungsgemäß in einem oberen Bereich der Bedieneinheit ausgebildet und kann auf einer, im Benutzungsfall dem Nutzer zugewandten oder abgewandten, Seite angeordnet sein. Eine Betätigungseinheit ist erfindungsgemäß als Taster, Schalter oder Daumenrad ausgebildet. Auch andere mechanische und elektrische Betätigungseinheiten, insbesondere ein Touchpad sind erfindungsgemäß. In vorteilhafter Weise ist eine Betätigungseinheit auf der, dem Nutzer zugewandten, Seite mit dem Daumen und die auf der, dem Nutzer abgewandten, Seite mit dem Zeige- und Mittelfinger bedienbar, indem der Nutzer in ergonomischer Weise den Betätigungsgriff mit vier seiner Finger umgreift und seinen Daumen auf der Oberseite des Betätigungsgriffes ablegt oder auf der ihm im Benutzungsfall zugewandten Seite.

Neben der Steuerung der beweglichen Komponenten über diese Betätigungseinheit, erfolgt diese natürlich auch über die Bewegung der Bedieneinheit selber.

Die erfindungsgemäße Vielzahl an Sensoreinheiten ist innerhalb des Griffbereichs auf der, dem Nutzer zugewandten, Seite angeordnet und dabei über die gesamte Länge des Griffbereichs verteilt. Die Verteilung der Sensoreinheiten auf dem Griffbereich ist bevorzugt ungleichmäßig, wobei diejenigen Bereiche der Bedieneinheit, bei denen von einer Berührung während einer Nutzung auszugehen ist, eine höhere Dichte an Sensoreinheiten aufweisen. Eine gleichmäßige Verteilung der Sensoreinheiten über die Bedieneinheit ist alternativ ebenfalls erfindungsgemäß. Diese Anordnung der Sensoreinheiten ermöglicht die Erkennung unterschiedlicher Handpositionen.

Die Sensoreinheiten sind erfindungsgemäß als kapazitive, induktive, optische, resistive oder Temperatursensoren ausgebildet. Erfindungsgemäß sind mindestens zwei, in vorteilhafter Weise mindestens vier unterschiedliche Handpositionen erkennbar. Diese Erkennung erfolgt aufgrund der Berührung der Bedieneinheit mittels einer Handinnenfläche und/oder einem Finger, insbesondere einer Fingerspitze und/oder einem Handballen.

Mit Vorteil ist vorgesehen, dass ein Nutzer durch die Vorrichtung einen Anreiz zu einem Positionswechsel erhält, beispielsweise ab einer vordefinierten Zeitdauer einer beibehaltenen Handstellung oder bei einer, für die Steuerung als unpassend oder den Nutzer als belastend angesehenen Handposition. Dieser Anreiz ist erfindungsgemäß ein optisches, akustisches oder haptisches Signal, durch eine erste Ausgabeeinheit ausgegeben. Dies steigert Effektivität, Beweglichkeit und Konzentrationsfähigkeit des Nutzers in vorteilhafter Weise. Diese erste Ausgabeeinheit ist dabei entweder unmittelbar an der Bedieneinheit oder aber unabhängig von dieser innerhalb des Nutzfahrzeuges angeordnet.

Je nach Handposition ist das Risiko einer versehentlichen Aktivierung der Bedieneinheit oder einer Betätigungseinheit erhöht bzw. gemindert. Demnach sind die Steuersignale der Betätigungseinheit bei Erkennung einer Handposition variabel freizugeben. Falls eine Handposition in einem oberen Bereich der Bedieneinheit erkannt wird, besteht ein erhöhtes Risiko einer versehentlichen Betätigung der dort angeordneten Betätigungseinheiten. Bei Freigabe der Schwenkbewegung der Bedieneinheit und/oder der Betätigungseinheiten erfolgt erfindungsgemäß ein zweites Ausgabesignal, welches einem Nutzer die Freigabe der entsprechenden Steuersignale bestätigt. Ebenfalls wird ein Nutzer mittels des zweiten Ausgabesignals darüber informiert, dass er seine Handposition wechseln muss, wenn er eine in seiner aktuellen Handposition deaktivierte Betätigungseinheit nunmehr benutzen möchte. Das zweite Ausgabesignal ist erfindungsgemäß ein optisches, akustisches oder haptisches, insbesondere eines mit einer charakteristischen Beleuchtung der Betätigungseinheiten mittels verschiedener Farben oder Leuchtintervallen. Alternativ ist es erfindungsgemäß, wenn das zweite Ausgabesignal über, an der Bedieneinheit angeordnete, Leuchtmittel oder an einem externen Display ausgegeben wird.

In Weiterbildung der Erfindung ist vorgesehen, dass die Erkennung verschiedener Handpositionen mittels vordefinierter Signalmuster der Sensoreinheiten erfolgt. Die hierzu benötigten Signalmuster sind in der Steuereinheit hinterlegt. Zur Erkennung einer Handposition müssen erfindungsgemäß mindestens zwei Sensoreinheiten ihre jeweilige Berührung erfassen. Wird eine solche Berührung der Bedieneinheit durch die Sensoreinheit erfasst, wird das erkannte Messsignalmuster mit den vordefinierten Signalmustern verglichen und bei Übereinstimmung mit einem dieser Muster das entsprechende Steuersignal freigegeben. Die Signalmuster sind derart, dass sie sämtliche mögliche Handpositionen an der Bedieneinheit abbilden. Ebenfalls erfindungsgemäß ist das Erfassen individueller Handpositionen des Nutzers durch die Sensoreinheiten und das Speichern dieses individuellen Signalmusters innerhalb der Steuereinheit. Mit großem Vorteil ist das erfindungsgemäße System damit individuell an einen Bediener und dessen Handpositionen anpassbar. Hierbei sind solche Signalmuster von einer Speicherung ausgeschlossen, die durch eine gesundheitsgefährdende Handpositionen eines Nutzers erzeugt würden. Diese gefährdenden Handpositionen nebst zugehöriger Signalmuster sind erfindungsgemäß vorher ermittelt worden.

In Weiterbildung der Erfindung ist vorgesehen, dass eine Sensoreinheit einzeln ausgelesen wird und/oder eine Gruppierung von einer Vielzahl von Sensoreinheiten ausgelesen werden, bzw. auslesbar sind. Beim Auslesen von Messsignalen einzelner Sensoreinheiten werden diese erfasst und innerhalb der Steuereinheit weiterverarbeitet.

Jedoch ist wegen der Individualität der physischen Beschaffenheiten einer Nutzerhand und der Individualität der Griffpositionen eine Vorabdefinition aller potentiell möglicher Signalmuster erschwert. Um dies auszugleichen, schlägt die Erfindung in Weiterbildung vor, dass auch eine Gruppierung von Sensoreinheiten gemeinsam ausgelesen wird. Eine solche Gruppierung ist durch mindestens zwei benachbarte Sensoreinheiten gebildet, wobei benachbart hier insbesondere als unmittelbar nebeneinander angeordnet definiert ist. Das gemeinsame Auslesen der Messsignale dieser Gruppierung ist vorteilhaft, da so auch eine Berührung mit individuellen Abweichungen als ordnungsgemäßer Griff erfasst wird und die Freigabe des Steuersignals ermöglicht. Hierzu ist erfindungsgemäß vor allem eine Toleranz bei der Anzahl der Berührungserkennungen durch die Sensoreinheiten der Gruppierung vorgesehen. So führt selbst eine geringere Anzahl an Berührungserkennungen als die Anzahl an Sensoreinheiten einer Gruppierung zu einer Freigabe der Steuersignale, solange ein Grenzwert nicht unterschritten ist. Mit anderen Worten erkennt die Erfindung beispielsweise auch bei einer Berührung von nur drei statt vier Fingern eine ordnungsgemäße und vordefinierte Handposition. Ein Signalmuster kann sowohl aus Messsignalen von mindestens zwei einzelnen Sensoreinheiten, als auch aus Messsignalen mindestens einer Gruppierung oder aus einer Kombination von Messsignalen mindestens einer einzelnen Sensoreinheit und mindestens einer Gruppierung ausgebildet sein. In jedem Fall müssen mindestens zwei Sensoreinheiten eine Berührung erkennen, um ein Signalmuster auszubilden, welches eine Handposition erkennt. Der Grenzwert - die Toleranz - zur Abweichung der Anzahl von Sensoreinheiten und Berührungserkennungen innerhalb einer Gruppierung liegt erfindungsgemäß bei höchstens 50%, vorteilhaft höchstens 35%, besonders vorteilhaft höchstens 20%.

Eine erfindungsgemäße Steuereinheit erkennt das Signal der Sensoreinheit bei Überschreitung oder Unterschreitung eines Schwellenwertes als Berührung. In Abhängigkeit von der angewandten Berechnungsmethode des Signals, steigt oder sinkt der Wert des Signals bei einer Berührung. Bei einem steigenden Signalwert bei einer Berührung ist eine Überschreitung eines Grenzwertes erforderlich, um eine Berührung zu erkennen. Bei einem sinkenden Signalwert bei einer Berührung ist eine entsprechende Unterschreitung eines Grenzwertes erforderlich, um eine Berührung zu erkennen. Da Nutzfahrzeuge üblicherweise in rauer Umgebung mit hoher Verschmutzung zum Einsatz kommen, kann auch ohne weiteres die Bedienerhand verschmutzt oder durch einen Schutzhandschuh überdeckt sein. Es ist daher vorgesehen, dass der Schwellenwert, ab dem ein Messsignal innerhalb der Steuereinheit als Berührung erkannt wird, so zu wählen ist, dass die Steuereinheit eine Berührung eines Nutzers in unterschiedlichen Verfassungen zuverlässig wahrnehmen kann, insbesondere liegt der Schwellenwert mindestens 20% über/unter dem Signal bei keiner Berührung. Zusätzlich ist in Abhängigkeit von der Schnelligkeit der Änderung des Signals, also von der ersten Ableitung einer Signalkurve, eine Berührung erkennbar. Sofern eine steile Flanke, insbesondere eine sprunghafte Änderung der Signalkurve vorliegt, bzw. ein hoher/tiefer Wert der ersten Ableitung erzielt wird, ist eine Berührung erkennbar.

Ebenfalls erfindungsgemäß ist die Aufrechterhaltung einer einmal erkannten Handposition und somit Freigabe der Steuersignale, selbst wenn die Sensoreinheiten für eine vordefinierte, kurze Leerzeit kontaktlos sind. Hierdurch führt beispielsweise ein kurzes Umgreifen nicht zu einer Blockierung der Steuersignale, ein flüssiges Arbeiten bleibt gewährleistet. Die Leerzeit ist erfindungsgemäß kleiner 1 Sekunde, vorteilhaft kleiner 0,8 Sekunden, besonders vorteilhaft kleiner 0,6 Sekunden gewählt.

In Ausgestaltung der Erfindung ist vorgesehen, dass ein Rückstellwiderstand innerhalb einer Schwenkbewegung der Bedieneinheit in Abhängigkeit von der Handposition angepasst wird, bzw. ist. Ein Bediener muss in Abhängigkeit seiner Handposition auf Grund der jeweiligen Hebelwirkung unterschiedliche Verstellkräfte aufbringen, um die Bedieneinheit zu verschwenken, insbesondere um dieselbe Schwenkbewegung gegen die Rückstellkraft auszuführen. Diesem Umstand wird erfindungsgemäß dadurch entgegengetreten, dass der Rückstellwiderstand handpositionsabhängig angepasst wird. Die Anpassung des Rückstellwiderstands erfolgt in besonders vorteilhafter Weise über die Nutzung einer magnetorheologischen Flüssigkeit. Andere mechanische, oder chemische Komponenten zur Anpassung des Rückstellwiderstandes sind ebenfalls erfindungsgemäß. Sofern also ein Nutzer die Bedieneinheit in einem oberen Bereich hält und demnach ein großer Hebel zur Schwenkachse existiert, wird die Rückstellkraft höher gewählt, als wenn er die Bedieneinheit in einem unteren Bereich hält: In dieser ist die Hebelwirkung deutlich kleiner. Unabhängig von der tatsächlichen Handposition ist demnach erfindungsgemäß ein im Wesentlichen konstanter Kraftaufwand zur Bedienung der Bedieneinheit eingestellt. Auch diese Maßnahme vermindert eine fehlerhafte Bedienung durch zu starken oder zu geringen Kraftaufwand.

Erfindungsgemäß sperrt oder entsperrt ein sequentielles Signalmuster erzeugt durch eine Handbewegung des Nutzers die Bedieneinheit für eine Nutzung. Die Erfindung erkennt also nicht nur rein statische Signalmuster, sondern auch sequentielle Signalmuster mittels der Sensoreinheiten und der Steuereinheit. Diese sequentiellen Signalmuster dienen vor allem zu einer generellen Freigabe der Bedieneinheit vor der ersten Nutzung, indem diese nur erfolgen kann, wenn eine vordefinierte Bewegungsreihenfolge ausgeführt und erkannt wird. Ein solches erfindungsgemäßes sequentielles Signalmuster ist beispielsweise eine Abfolge von vordefinierten Handpositionen, aber auch eine Abfolge einzeln zu berührender Sensoreinheiten oder Gruppierungen. Nur wenn ein Nutzer diese sequentielle Abfolge bestimmter Signalmuster erzeugt hat, ist die Bedieneinheit für den üblichen Betrieb mittels Handpositionserkennung aktiviert. Sofern ein Nutzer seinen Arbeitsplatz verlässt, tätigt dieser nochmals eine vordefinierte sequentielle Abfolge bestimmter Signalmuster, sodass die Nutzung der Bedieneinheit auch bei Erkennung einer Handposition, welche mit einem Signalmuster übereinstimmt, bis zu einer weiteren Aufhebung der Sperrung durch das sequentielle Signalmuster nicht möglich ist.

Die Erfindung wird nachfolgend mittels einer Ausführungsform anhand der Figuren der Zeichnung näher erläutert, wobei
- **Fig. 1**: eine perspektivische Ansicht einer Bedieneinheit,
- **Fig. 2a**: eine Seitenansicht einer Bedieneinheit während einer Nutzung in einer ersten Handposition,
- Fig. **2b**: eine Seitenansicht einer Bedieneinheit während einer Nutzung in einer zweiten Handposition,
- **Fig. 2c**: eine Seitenansicht einer Bedieneinheit während einer Nutzung in einer dritten Handposition,
- **Fig. 2d**: eine Seitenansicht einer Bedieneinheit während einer Nutzung in einer vierten Handposition,
- **Fig. 3**: ein Verlaufsdiagramm zur Steuerung der Bedieneinheit zeigen.

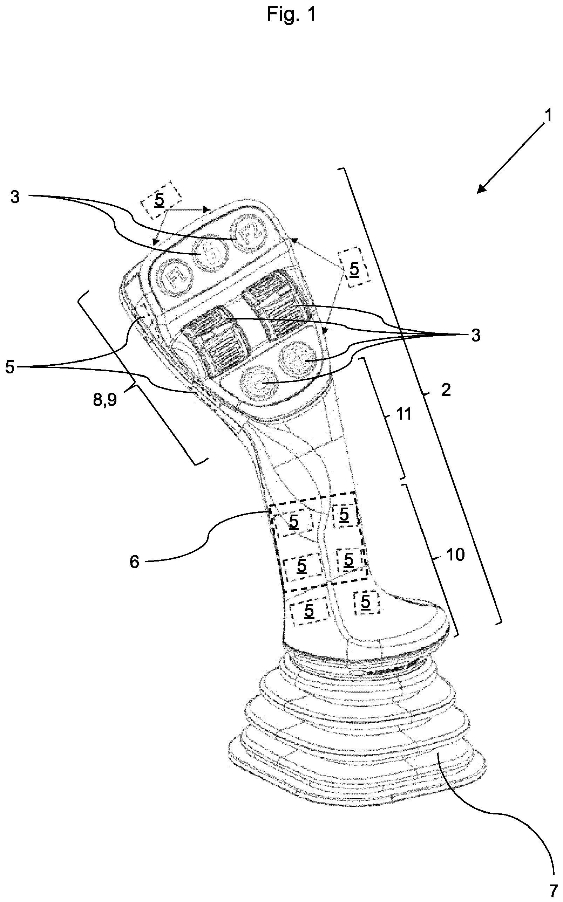

**Fig. 1** zeigt eine perspektivische Ansicht einer Bedieneinheit 1, wobei die Bedieneinheit 1 neben einem Griffbereich 2, einen Faltenbalg 7 sowie einen Betätigungsbereich 8 aufweist. Der Faltenbalg 7 ist unterhalb des Griffbereiches 2 angeordnet und gewährleistet eine wasser- und staubdichte Verbindung zwischen Bedieneinheit 1 und einer nicht dargestellten Bedienfläche eines Nutzfahrzeuges. Der Betätigungsbereich 8 ist in einem oberen Bereich 9 der Bedieneinheit 1 angeordnet, wobei innerhalb diesem Betätigungseinheiten 3 in Form von Tastern und Daumenrädern ausgebildet sind. Um den Betätigungsbereich 8 sind sechs berührungserfassende Sensoreinheiten 5 angeordnet. In einem unteren Bereich 10 der Bedieneinheit 1 sind weitere sechs Sensoreinheiten 5 angeordnet, welche innerhalb eines Rasters positioniert sind. Vier der sechs, in einem unteren Bereich 10 angeordneten, Sensoreinheiten 5 sind zu einer Gruppierung 6 zusammenfassbar. In dieser Ausführungsform der Erfindung sind sämtliche Sensoreinheiten 5 im Wesentlichen auf einer, dem Nutzer zugewandten, Seite angeordnet. Die Bedieneinheit 1 weist demnach in ihrem oberen und unteren Bereich 9, 10 eine höhere Dichte an Sensoreinheiten 5 auf, als in einem mittleren Bereich 11.

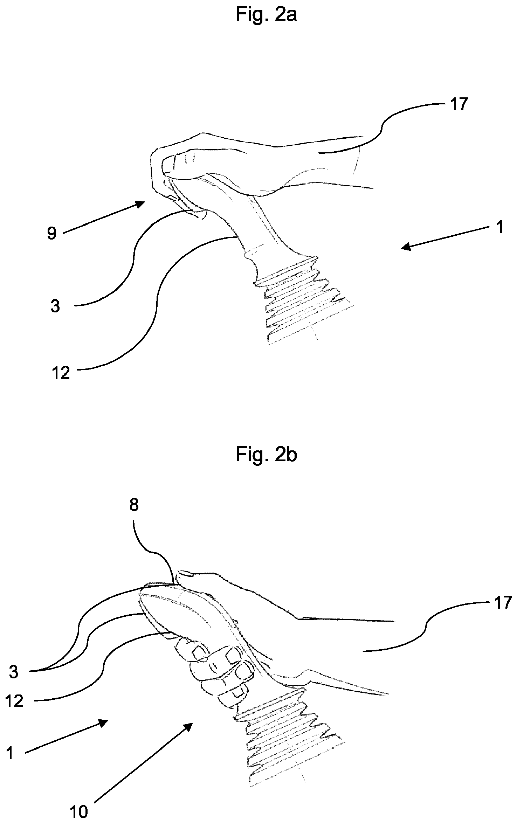

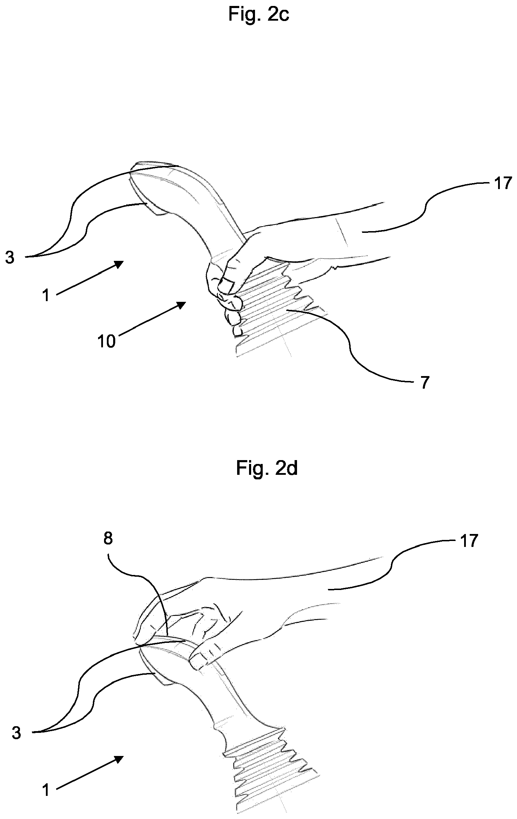

Die **Figuren 2a** - **2d** zeigen eine Seitenansicht einer Bedieneinheit 1 während einer Nutzung in verschiedenen Handpositionen, wobei Fig. 2a eine erste Handposition, Fig. 2b eine zweite Handposition, Fig. 2c eine dritte Handposition und Fig. 2d eine vierte Handposition zeigt.

Die erste Handposition (Fig. 2a) wird über die, in einem oberen Bereich 9 angeordneten, Sensoreinheiten 5 erkannt. Während einer Nutzung der Bedieneinheit 1 in einer ersten Handposition ist die Hand 17 den Betätigungsbereich 8 überdeckend ausgebildet, was zu einer versehentlichen Betätigung der dort angeordneten Betätigungseinheiten 3 führen kann. Demnach sind Steuersignale 18 der Betätigungseinheiten 3, welche innerhalb des Betätigungsbereiches 8 angeordnet sind, bei Erkennung einer ersten Handposition nicht freigegeben. An einer, dem Nutzer abgewandten, Seite 12 sind ebenfalls Betätigungseinheiten 3 angeordnet sind. Diese sind insbesondere mittels Zeige- und/oder Ringfinger des Nutzers erreichbar, sodass deren Steuersignale 18 bei Erkennung der ersten Handposition freigegeben sind.

Während einer Nutzung der Bedieneinheit 1 in einer zweiten Handposition (Fig. 2b) liegt ein Handballen der Hand 17 in dem unteren Bereich 10 der Bedieneinheit 1 und der Betätigungsbereich 8 ist insbesondere über den Daumen für einen Nutzer erreichbar. Die Betätigungseinheiten 3 auf der abgewandten Seite 12 sind insbesondere über den Zeige- und/oder Mittelfinger des Nutzers erreichbar. Da in dem unteren Bereich 10 keine Betätigungseinheiten 3 angeordnet sind und durch eine derartige Positionierung der Hand 17 auch die Schwenkbewegung der Bedieneinheit 1 nicht beeinträchtigt ist, sind alle Steuersignale 18 der Bedieneinheit 1 und der Betätigungseinheiten 3 freigegeben. Die Handposition wird insbesondere über die Sensoreinheiten 5, welche in einem unteren Bereich 10 angeordnet sind erkannt.

**Fig. 2c** zeigt eine dritte Handposition bei der sich die Hand 17 über den unteren Bereich 10 sowie über Teile des Faltenbalges 7 erstreckt. Eine Einschränkung der Freigabe der Betätigungseinheiten 3 ist hier nicht zwingend notwendig, da diese für die bedienende Hand 17 unerreichbar sind und demnach auch ein geringes Risiko einer versehentlichen Betätigung besteht. Die durch einen Nutzer aufgebrachte Hebelwirkung ist innerhalb dieser dritten Handposition insbesondere im Vergleich zur ersten Handposition erheblich verringert, sodass eine Anpassung des Rückstellwiderstandes und eine Kalibrierung der Schwenkbewegung erfindungsgemäß realisiert ist.

Eine vierte Handposition, bei der die Bedieneinheit 1 insbesondere über die Fingerspitzen der Hand 17 berührt ist, ist in **Fig. 2d** dargestellt. Die Betätigungseinheiten 3 sind für einen Nutzer auf Grund der Steuerung der Bedieneinheit 1 mittels seiner Finger nicht erreichbar. Durch ein Verrutschen der Finger während der Steuerung besteht allerdings ein Risiko einer versehentlichen Betätigung der, innerhalb der Betätigungsbereichs 8 angeordneten, Betätigungseinheiten 3. Demnach ist eine Freigabe der Steuersignale 18 dieser Betätigungseinheiten 3 bei Erkennung der vierten Handposition nicht ausgebildet.

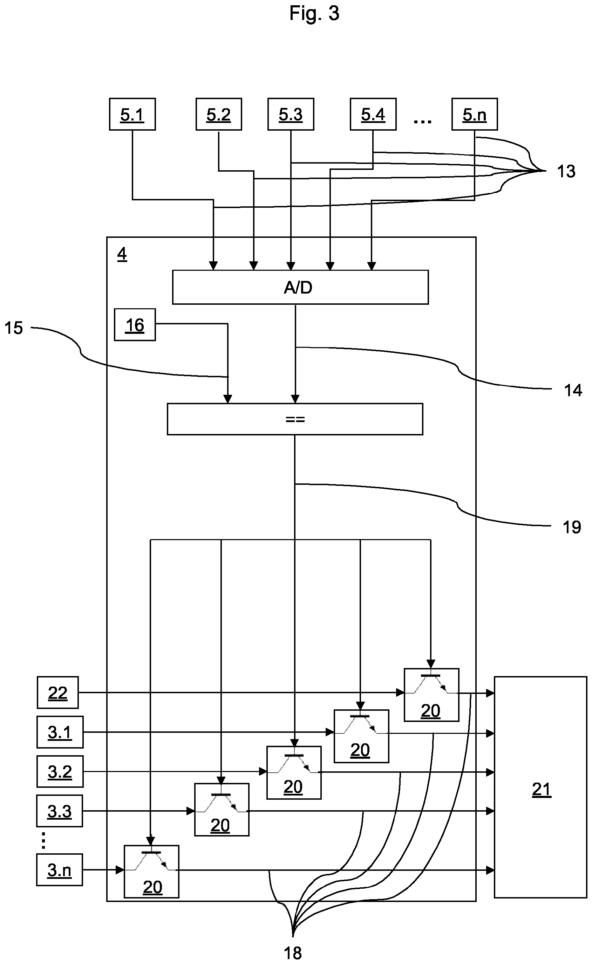

**Fig.** 3 zeigt ein Verlaufsdiagramm zur Abfrage der Freigabe von Steuersignalen 18 der Bedieneinheit 1, wobei Messsignale 13 von einer Vielzahl an Sensoreinheiten 5, welche insbesondere als kapazitive Sensoren ausgebildet sind, an eine Steuereinheit 4, welche als Mikrocontroller ausgebildet ist, weitergeleitet werden. Innerhalb der Steuereinheit 4 werden die Messsignale 13 in digitale Werte umgewandelt, wobei 1 die Erkennung einer Berührung und 0 keine Berührung definiert. Die digitalen Werte sind zu einem Messsignalmuster 14 zusammenfassbar. Dieses Messsignalmuster 14 wird mit vordefinierten Signalmustern 15 aus einer Speichereinheit 16 verglichen. Stimmt das durch die Berührung eines Nutzers erzeugte Messsignalmuster 14 mit einem Signalmuster 15 überein, ist eine, in Abhängigkeit von dem Signalmuster 15 in der Speichereinheit 16 hinterlegte, Handposition ermittelt. Nach Ermittlung einer oder keiner Handposition werden entsprechende Freigabesignale 19 an Schalter 20, welche insbesondere innerhalb der Steuereinheit 4 ausgebildet sind, weitergeleitet. Die Ausbildung der Schalter 20 als externe Transistoren, Feldeffekttransistoren (FET), oder andere elektrische, chemische oder mechanische Schalter ist ebenfalls erfindungsgemäß. Die durch einen Nutzer über eine Bewegungsermittlungseinheit 22 der Bedieneinheit 1 und/oder die Betätigungseinheiten 3.1, 3.2, 3.3, 3.n ausgelösten Steuersignale 18 werden über die Schalter 20 an die entsprechenden nachfolgenden nicht dargestellten elektrischen und mechanischen Maschinenkomponenten 21 des Nutzfahrzeuges weitergeleitet, sofern das entsprechende Freigabesignal 19 den Schalter 20 schließt. Sofern keine eindeutige Handposition nach Abgleich des vorliegenden Messsignalmusters 14 mit den Signalmustern 15 ermittelt werden kann, ist eine Freigabe der Steuersignale 18 blockiert und der Schalter 20 entsprechend geöffnet.

### BEZUGSZEICHENLISTE

- 1: Bedieneinheit
- 2: Griffbereich
- 3: Betätigungseinheit
- 4: Steuereinheit
- 5: Sensoreinheit
- 6: Gruppierung
- 7: Faltenbalg
- 8: Betätigungsbereich
- 9: oberer Bereich
- 10: unterer Bereich
- 11: mittlerer Bereich
- 12: abgewandte Seite
- 13: Messsignal
- 14: Messsignalmuster
- 15: Signalmuster
- 16: Speichereinheit
- 17: Hand
- 18: Steuersignal
- 19: Freigabesignal
- 20: Schalter
- 21: Maschinenkomponente
- 22: Bewegungsermittlungseinheit

## Patentansprüche

1. Bedieneinheit (1) für ein Nutzfahrzeug, aufweisend einen Griffbereich (2), mindestens eine Betätigungseinheit (3) und eine Steuereinheit (4), wobei der Griffbereich (2) eine Vielzahl berührungserfassender Sensoreinheiten (5) aufweist, wobei die Steuereinheit (4) Signale der Sensoreinheiten (5) erfassend und auf Grundlage der Signale eine beabsichtigte Bedienung erkennend ausgebildet ist, **dadurch gekennzeichnet, dass** eine Anordnung der Sensoreinheiten (5) derart ausgebildet ist, dass mittels der Steuereinheit (4) unterschiedliche Handpositionen erkennbar sind, wobei die Steuereinheit (4) in Abhängigkeit von der Handposition, durch die Bedieneinheit (1) und/oder die mindestens eine Betätigungseinheit (3) erzeugte Steuersignale freigebend ist.

2. Bedieneinheit (1) nach Anspruch 1 oder 2, **dadurch gekennzeichnet, dass** die Erkennung verschiedener Handpositionen mittels vordefinierter Signalmuster der Sensoreinheiten (5) erfolgend ausgebildet ist.

3. Bedieneinheit (1) nach einem der vorhergehenden Ansprüche, **dadurch gekennzeichnet, dass** eine Sensoreinheit (5) einzeln auslesbar und/oder eine Gruppierung (6) von einer Vielzahl von Sensoreinheiten (5) auslesbar ist.

4. Bedieneinheit (1) nach einem der vorhergehenden Ansprüche, **dadurch gekennzeichnet, dass** die Steuereinheit (4) das Signal der Sensoreinheit (5) bei Überschreitung oder Unterschreitung eines Schwellenwertes als Berührung erkennt.

5. Bedieneinheit (1) nach einem der vorhergehenden Ansprüche, **dadurch gekennzeichnet, dass** ein Rückstellwiderstand innerhalb einer Schwenkbewegung der Bedieneinheit (1) in Abhängigkeit von der Handposition angepasst ausgebildet ist.

6. Bedieneinheit (1) nach einem der vorhergehenden Ansprüche, **dadurch gekennzeichnet, dass** ein sequentielles Signalmuster, erzeugt durch eine Handbewegung eines Nutzers, die Bedieneinheit (1) für eine Nutzung sperrend und/oder entsperrend ist.
